# EUROPEAN PATENT APPLICATION

(11) **EP 1 942 580 A2**
(43) Date of publication of application: **09.07.2008**
(21) Application number: 07380306.6
(22) Date of filing: 05.11.2007
(51) Int. Cl.: H04B 1/38

(54) **Case for electromagnetic radiation emitting devices**

(30) Priority: 06.11.2006 ES 200602407
(71) Applicant: Passas Varo, Maria, 18014 Granada (ES)
(72) Inventor: Passas Varo, Maria, 18014 Granada (ES)

(57) **Abstract**

A protective case for electromagnetic radiation emitting devices comprising a main volume, opened in its upper side, which will contain the emitting device, with the feature that it encloses at least a rigid, or flexible, electromagnetic shielding material sheet or net, with the aim of protecting the user from electromagnetic radiation emitted by the aforementioned devices.

## Description

### Field of the invention

The present invention is related to a protective case for electromagnetic radiation emitting devices, such as mobile telephones, personal digital assistants (PDAs), or pocket PCs, which shields the user from the electromagnetic radiation coming from the aforementioned device.

### Background of the invention

Today, there is a general preoccupation that radiation coming from devices used to transmit and receive voice and data via a radio-electric links could be harmful to human body. Nowadays there are not any scientific studies that certify if this kind of radiation is harmful to human cells, at least for a short period of time.

However, we know that prolonged exposure to radiation at higher frequencies, such as ionising radiation frequencies (X rays), produce cell disorders, making them mutate, even causing malignant tumours to appear. This precedent is one of the principal fears in modern society. In order to solve this problem there exists a wide range of devices that prevent this radiation reaching the human body, as described in patents and utility models ES2170663A1, ES2204253A1, ES1060980U and ES1051128U, among others. But these kind of devices are neither very attractive to users nor accessible, due to the fact that they are either limited to the device topology, or they require the collaboration of device producer companies to modify the device case itself in order to prevent radiation reaching the person.

An attractive, accessible and cheap solution to the general public should be a protective case for any emitting device, which shields the user from electromagnetic radiation at the same time.

These days there are plenty of variants of cases for electromagnetic emitting devices, such as the utility models and patent ES1034039U, ES1034099U, ES1035981U, ES1036326U, ES1037175U, ES1038033U, ES1039642U, ES1040498U, ES1045748U, ES1046967U, ES1053442U, ES1053702U, ES1060534U, ES1055237U, ES1057654U, ES1061253U, ES1062246U, ES1063259U y ES2210419T3, among others.

Excepting two of the above, none of them consider the possibility of shielding the human body from radiation. The utility model ES1062246U, entitled "Axial support for mobile phones and diverse articles" is the only utility model with a claim in this field, but, as seen later, there are relevant differences between this utility model and the other one. Regarding to the utility model ES1061253U, entitled "Protective case", it is considered that the material the case is made of could be a shielding material, but totally, not partially as proposed below.

### Detailed description of the invention

The object of this invention is to describe a protective case for an electromagnetic radiation emitting device, which shields the electromagnetic radiation coming from the said device by one, but not all of its sides, in order to let the electromagnetic field enter the protective case so that the device's function isn't affected.

Protective case will be made of cloth, leather, plastic or its derivatives, or similar materials, and will consist in a main prismatic or tubular volume, opened in its upper side, the function of which will be to contain the electromagnetic emitting device, characterized by at least a sheet or net made of rigid or flexible electromagnetic shielding material, with size enough to cover one of the emitting device faces. This shielding sheet or net will be able to be hidden inside the case. If it is not hidden, it will be sewn or stuck on the outer or inner face of the main volume with a glue, Velcro, magnets or similar system. If the shielding sheet or net is hidden inside the case, it will be trapped between two or more cloth, plastic or its derivatives, or similar material pieces, which will themselves be joined be it sewn, stuck, welded, with a Velcro system or in similar ways. One of these two pieces could be part of the main volume of the case. The shielding sheet will also be able to be hidden inside an inner auxiliary case made of cloth, plastic or its derivatives, or similar material, which will be able to be stuck on the outer or inner surfaces of the main volume. This auxiliary case will be able to be sewn, stuck, welded, with a Velcro system or joined with a similar system to the main volume.

The case would be provided with an attachment system for a handbag, a bag, a pocket, a belt or similar article, the shielding sheet being the closest part of the protective case to the user's body. The case will remain immobile so the electromagnetic radiation will not reach the user's body. One method of attaching the case to the handbag, for example, could be using magnets with enough force to be joined to the shielding sheet through a cloth. Another way of attaching the case to the handbag could be a Velcro system, where the female Velcro strip is permanently joined to the case, and the male Velcro strip is stuck or sewn to the inner part of the handbag. Third way of attaching the case to the handbag could be an adaptable extension of the case, with shielding material inside of it, and enough weight to remain still when this extension is introduced into the pocket of a handbag.

The case can be provided with a clasp system to avoid the unwanted exit of the device.

The case can be provided with pockets to let the user to attach different things to the case.

The case can be provided with a strap system to carry the case in different ways.

### Brief description of the drawings

Hereafter is described a non limitative case of practical achievement of the invention, as an example, accompanied by the following drawings:

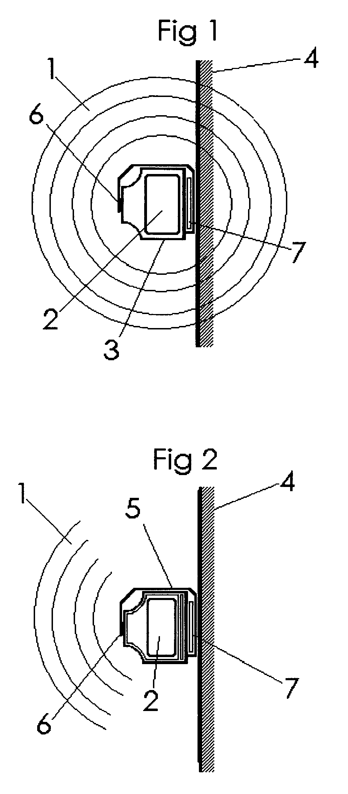

**Figure 1** describes, in a figurative sense, the device's (2) electromagnetic radiation pattern(1) when it is emitting/receiving to/from the closest base station, even if the user (4) is not using the mobile phone, when it is placed in a common protective case (3).
**Figure 2** describes, in a figurative sense, the device's (2) electromagnetic radiation pattern(1) when it is emitting/receiving to/from the closest base station, even if the user(4) is not using the mobile phone, when it is placed in a protective case (5) as the described in this invention. We can see that electromagnetic field does not reach the user's body.

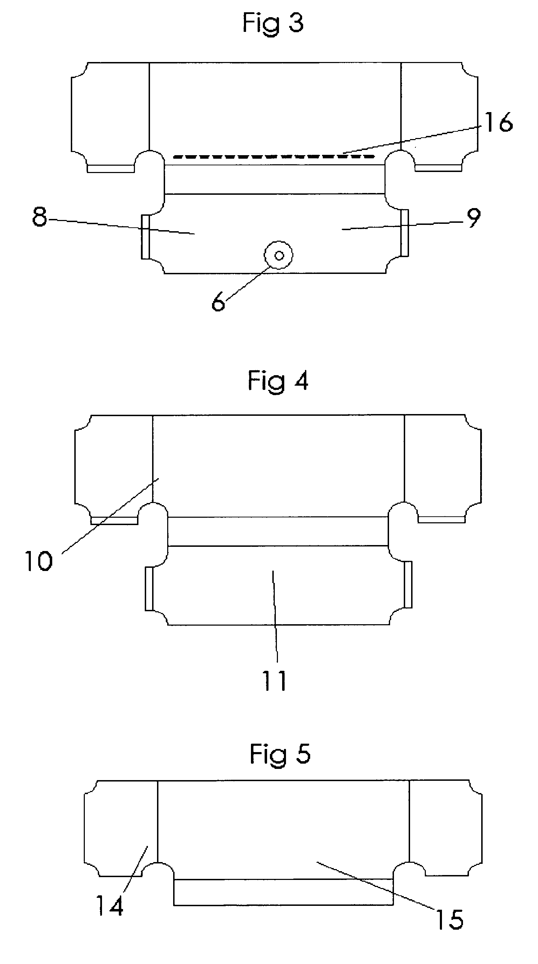

**Figure 3** describes the outer leather (9) piece A (8) of the case, provided with a male stud (6). The seam (16) will fix the cover to the main volume.
**Figure 4** describes the inner cloth (11) piece B (10).
**Figure 5** describes the inner malleable aluminium (16) piece E (14).

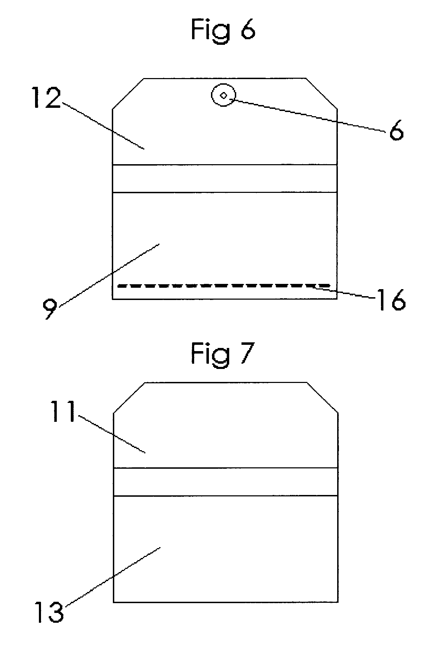

**Figure 6** describes the outer leather (9) piece C (12), provided with a female stud (6). The seam (16) will fix the cover to the main volume.
**Figure 7** describes the inner cloth (11) piece D (13), which will form the cover of the case with piece C (12).

### Description of a preferential realization

One of the possibilities of manufacturing this invention according to the figures described above consists of a case built by two leather pieces, A and C, a metallic piece E and two cloth pieces, B and D, assembled in this way: piece A (8) and piece B (10) will lodge piece E (14), which will be previously attached to piece B (10). Once piece E(14) is attached to piece B(10), pieces A (8) and B(10) will be sewn together lodging piece E(14) between them, the three of them forming the main volume. Pieces C(12) and D(13) will be sewn together with no metallic piece between them, forming the case cover. Hereafter, the main volume will be bent and sewn to form a prismatic shape. Then, the cover will be sewn to the prismatic, main volume so the group will conform the preferred case.

This description is not intended to be any more extensive in order to let an expert in this subject understand the invention's potential and the advantages derived from it.

Materials, shape, size and location of the elements that form the case will be susceptible to change as long as these changes do not vary the essence of the invention.

The terms written above should always be understood in a wide and non-limitative sense.

## Claims

1. A protective case for electromagnetic radiation emitting devices comprising a main volume, opened in its upper side, which will contain the emitting device, with the feature that it encloses at least a rigid, or flexible, electromagnetic shielding material sheet or net.

2. The protective case for electromagnetic radiation emitting devices of claim 1 wherein it contains the electromagnetic shielding material sheet or net hidden inside the case, between two or more cloth, leather, plastic or similar material pieces joined together, whether sewn, stuck, welded, melted, with a Velcro system or with a similar function system to the main volume, one of these two pieces being part of the main volume of the case.

3. The protective case for electromagnetic radiation emitting devices of claim 1 wherein it contains the electromagnetic shielding material sheet or net hidden inside an auxiliary cloth, leather, plastic or similar material case which can be joined to the main volume, to either the inner or outer surfaces, whether sewn, stuck, welded, melted, with a Velcro system or with a similar function system to the main volume.

4. The protective case for electromagnetic radiation emitting devices of claim 1 wherein it contains the electromagnetic shielding material sheet or net in a visible way whether sewn, stuck, welded, melted, with a Velcro system or with a similar function system to the main volume.

5. The protective case for electromagnetic radiation emitting devices of claim 1 wherein it is provided with an attachment system for a handbag, pocket, belt or similar item to keep the electromagnetic shielding material sheet or net as close to the user's body as possible.

6. The protective case for electromagnetic radiation emitting devices of claim 1 wherein it is provided with a clasp system to avoid the unwanted exit of the electromagnetic radiation emitting device.

7. The protective case for electromagnetic radiation emitting devices of claim 1 wherein it is provided with pockets to keep different user accessories inside.

8. The protective case for electromagnetic radiation emitting devices of claim 1 wherein it is provided with a belt or strap system to let the user to carry the case in different ways.
